# EUROPÄISCHE PATENTSCHRIFT

(11) **EP 3 363 692 B1**
(45) Veröffentlichungstag und Bekanntmachung des Hinweises auf die Patenterteilung: **09.01.2019**
(21) Anmeldenummer: 17001887.3
(22) Anmeldetag: 17.11.2017
(51) Int. Cl.: B60R 22/32

(54) **SICHERHEITSVORRICHTUNG FÜR EINEN SICHERHEITSGURT EINES FAHRZEUGS**
SAFETY DEVICE FOR A SAFETY BELT OF A MOTOR VEHICLE
DISPOSITIF DE SÉCURITÉ POUR UNE CEINTURE DE SÉCURITÉ D'UN VÉHICULE

(30) Priorität: 15.02.2017 DE 102017001529
(43) Veröffentlichungstag der Anmeldung: 22.08.2018
(73) Patentinhaber: AUDI AG, 85045 Ingolstadt (DE)
(72) Erfinder: Amon, Henry, 74172 Neckarsulm (DE); Bender, Fabian, 74172 Neckarsulm (DE); Haffelder, Christoph, 74906 Bad Rappenau (DE); HAY, Robin, 74254 Offenau (DE); Lang, Elmar, 74831 Gundelsheim (DE)

(56) Entgegenhaltungen:
- DE-A1- 3 204 063
- DE-A1- 3 905 525

## Beschreibung

Die Erfindung betrifft eine Sicherheitsvorrichtung für einen Sicherheitsgurt eines Fahrzeugs gemäß der Gattung des Patentanspruchs 1 sowie ein Verfahren zur Entlastung eines Sicherheitsgurts bei einer Dach- oder Seitenlage eines verunfallten Fahrzeugs unter Verwendung einer solchen Sicherungsvorrichtung und ein Fahrzeug mit mindestens einer solchen Sicherheitsvorrichtung.

Im Straßenverkehr kommt es häufig zu einer Unfallsituation, bei welcher das Fahrzeug nach dem Unfall eine Dach- oder Seitenlage einnimmt und die beteiligten Insassen über Kopf in den Sicherheitsgurten hängen. Daher sind aus dem Stand der Technik Sicherheitsvorrichtungen für Sicherheitsgurte eines Fahrzeugs in zahlreichen Variationen bekannt, welche zur Entlastung des Sicherheitsgurts in lebensbedrohlicher Situation nach einem Verkehrsunfall eingesetzt werden. Solche Sicherheitsvorrichtungen umfassen jeweils eine Trennvorrichtung, welche mit einem Gurtband des Sicherheitsgurts gekoppelt ist und ein in einer Führung geführtes Trennelement aufweist. Das Trennelement ist durch Kraftbeaufschlagung eines Betätigungselements in der Führung bewegbar und durchtrennt das Gurtband. Durch solche Sicherheitsvorrichtungen können sich verunfallte Personen selbstständig oder auch unterstützt von Rettungskräften, ohne zusätzliches Werkzeug aus dem Sicherheitsgurt befreien. Allerdings kann es vorkommen, dass die betroffenen Personen nachdem sie selbst den Gurt gelöst haben abstürzen. Auch für Ersthelfer ist es schwierig den Sicherheitsgurt zu lösen und gleichzeitig die Person zu stützen, so dass sie nicht herunterfällt.

Aus der DE 32 04 063 A1 ist eine Sicherheitsvorrichtung für einen Sicherheitsgurt eines Fahrzeugs nach dem Oberbegriff von Anspruch 1 bekannt, dessen Gurtband ausgehend von seinem einen dem Gurtschloss abgewandten Befestigungsende, am Fahrzeug durch einen etwa schulterseitig angeordneten Umlenkbügel geführt ist. Das Gurtband verläuft mit einem Abschnitt durch einen im Wesentlichen spaltförmigen Hohlraum eines Messerträgers, welcher ein an einem Reißgriff angeordnetes Messer quer zur Breifläche des spaltförmigen Hohlraums, diesen durchgreifend, verschiebbar führt. Der Messerträger ist am Steg des Umlenkbügels angeordnet, wobei der spaltförmige Hohlraum des Messerträgers als vom Gurtband freibeweglich durchgriffene Durchzugsöffnung ausgebildet ist.

Der Erfindung liegt die Aufgabe zu Grunde, eine Sicherheitsvorrichtung für einen Sicherheitsgurt eines Fahrzeugs sowie ein Verfahren zur Entlastung eines Sicherheitsgurts bei einer Dach- oder Seitenlage eines verunfallten Fahrzeugs unter Verwendung einer solchen Sicherungsvorrichtung und ein Fahrzeug mit mindestens einer solchen Sicherheitsvorrichtung bereitzustellen, welche ermöglicht, dass sich verunfallte Personen selbstständig oder auch unterstützt von Rettungskräften, ohne zusätzliches Werkzeug bei einer Seiten- oder Dachlage des Fahrzeugs langsam absenken können.

Erfindungsgemäß wird die Aufgabe durch Bereitstellung einer Sicherheitsvorrichtung für einen Sicherheitsgurt eines Fahrzeugs mit den Merkmalen des Patentanspruchs 1 und durch ein Verfahren zur Entlastung eines Sicherheitsgurts bei einer Dach- oder Seitenlage eines verunfallten Fahrzeugs unter Verwendung einer solchen Sicherungsvorrichtung mit den Merkmalen des Patentanspruchs 15 und durch ein Fahrzeug mit den Merkmalen des Patentanspruchs 18 gelöst. Vorteilhafte Ausführungsformen und Weiterbildungen der Erfindung sind in den abhängigen Ansprüchen angegeben.

Um eine Sicherheitsvorrichtung für einen Sicherheitsgurt eines Fahrzeugs bereitzustellen, welche ermöglicht, dass sich verunfallte Personen selbstständig oder auch unterstützt von Rettungskräften, ohne zusätzliches Werkzeug bei einer Seiten- oder Dachlage des Fahrzeugs langsam absenken können, ist die Trennvorrichtung an einer Befestigungsvorrichtung des Gurtbands angeordnet. Hierbei ist ein gefaltetes Überbrückungsband an einem ersten Ende fest am Gurtband und an einem zweiten Ende fest an der Befestigungsvorrichtung befestigt und überbrückt die Trennstelle des durchtrennten Gurtbands. Zudem ist das gefaltete Überbrückungsband zwischen den beiden Enden über Befestigungsmittel lösbar mit dem Gurtband verbunden, wobei die Befestigungsmittel mit dem Betätigungselement gekoppelt sind und durch Kraftbeaufschlagung des Betätigungselements abschnittsweise lösbar sind, so dass die Falten des Überbrückungsbands nacheinander freigebbar sind und jede freigegebene Falte des Überbrückungsbands eine wirksame Gurtlänge des Sicherheitsgurts verlängert.

Zudem wird ein Verfahren zur Entlastung eines Sicherheitsgurts bei einer Dach- oder Seitenlage eines verunfallten Fahrzeugs unter Verwendung der Sicherungsvorrichtung vorgeschlagen. Hierbei kann ein Insasse bzw. eine verunfallte Person oder ein Ersthelfer eine Kraft auf das Betätigungselement ausüben und über die Trennvorrichtung das Gurtband im Bereich der Befestigungsvorrichtung durchtrennen. Das Überbrückungsband überbrückt dann die Trennstelle des durchtrennten Gurtbands und das kraftbeaufschlagte Betätigungselement löst die Befestigungsmittel abschnittsweise, so dass die Falten des Überbrückungsbands nacheinander freigegeben werden und die wirksame Gurtlänge des Sicherheitsgurts bis zum Aufliegen des Insassen stückweise verlängert wird.

Durch Ausführungsformen der erfindungsgemäßen Sicherheitsvorrichtung kann sich eine verunfallte, nicht bewusstlose und orientierte Person aus einem auf der Seite oder Dach liegenden Fahrzeug ohne zusätzliches Werkzeug aus einer "Überkopfhaltung" selbst befreien und sich langsam auf das Dach oder die Seite des auf dem Dach oder der Seite liegenden Fahrzeugs absenken. Durch die Trennvorrichtung kann das Gurtband des Sicherheitsgurts gewollt durchtrennt werden. Ab diesem Zeitpunkt hängt die Person am Überbrückungsband. Dieses übernimmt die gesamte Zuglast. Bei weiterer Kraftbeaufschlagung des Betätigungselements entsteht eine Verlängerung des Überbrückungsbands. Das Überbrückungsband wird deshalb länger, weil die Falten sich nach und nach öffnen und die verunfallte Person in kleinen Schritten immer weiter abgesenkt wird, bis sie auf dem Dach oder der Seite des Fahrzeugs aufliegt. Weitere Rettungsschritte können dann erfolgen. Die Gefahr mit dem Kopf voraus auf das Dach zu fallen besteht nicht mehr.

Somit können sich verunfallte Personen entweder selbstständig in Sicherheit bringen oder auch von ungeübten, schwächeren Ersthelfern oder erfahrenen Rettungskräften geborgen werden. Dadurch kann in vorteilhafter Weise verhindert werden, dass es zu weiteren Verletzungen, insbesondere am Genick der Personen kommt. Deshalb tragen Ausführungsformen der erfindungsgemäßen Sicherheitsvorrichtung zu einer deutlichen Verbesserung der Sicherheit bei der Befreiung von Personen aus einem verunfallten Fahrzeug bei. Da die Benutzung einfach und werkzeuglos möglich ist, kann die Bedienung auch in stressigen Situationen ausgeführt werden. Im Vergleich zur seitherigen Technik wird es besser und schneller und vor allem mit weniger Folgeverletzungen möglich sein, sich zu befreien oder befreien zu lassen. In vorteilhafter Weise sind Ausführungsformen der erfindungsgemäßen Sicherheitsvorrichtung leicht, robust und erfordern wenig bis keinen zusätzlichen Bauraum.

In vorteilhafter Ausgestaltung der erfindungsgemäßen Sicherheitsvorrichtung kann die Kopplung des Betätigungselements mit dem Trennelement und die Kopplung des Betätigungselements mit den Befestigungsmitteln so ausgeführt werden, dass bei einer Kraftbeaufschlagung des Betätigungselements zuerst das Trennelement zur Durchtrennung des Gurtbands aktiviert wird und dann die Befestigungsmittel gelöst werden.

In weiterer vorteilhafter Ausgestaltung der erfindungsgemäßen Sicherheitsvorrichtung kann das Trennelement über eine Reißleine mit dem Betätigungselement gekoppelt werden. Die Reißleine kann beispielsweise an einem Ende fest mit der Befestigungsvorrichtung und am anderen Ende fest mit dem Betätigungselement verbunden werden.

In weiterer vorteilhafter Ausgestaltung der erfindungsgemäßen Sicherheitsvorrichtung können die Befestigungsmittel einen Faden umfassen, welcher am ersten Ende des Überbrückungsbands mindestens eine feste und nicht lösbare Naht und zwischen den beiden Enden des Überbrückungsbands mehrere lösbare Nähte zwischen dem Gurtband und dem Überbrückungsband ausbilden kann, wobei die lösbaren Nähte jeweils mindestens eine Falte des Überbrückungsbands am Gurtband fixieren können. Zudem kann die abschnittweise Verlängerung der wirksamen Gurtlänge des Sicherheitsgurts über den Abstand der Falten des Überbrückungsbands bestimmt bzw. vorgegeben werden. Des Weiteren kann der Faden fest mit dem Betätigungselement verbunden werden.

In weiterer vorteilhafter Ausgestaltung der erfindungsgemäßen Sicherheitsvorrichtung kann die Reißleine auch den Faden ausbilden.

Für eine besonders einfache und kostengünstige Ausgestaltung der erfindungsgemäßen Sicherheitsvorrichtung kann das Betätigungselement als Abreißlasche mit einem Fingereingriff ausgeführt werden.

In weiterer vorteilhafter Ausgestaltung der erfindungsgemäßen Sicherheitsvorrichtung kann das Trennelement einen in der Führung bewegbaren Schlitten mit einer Klinge aufweisen. Hierbei kann der Schlitten im Normalbetrieb durch eine Rückhaltvorrichtung in seiner Ausgangslage an einem ersten Ende der Führung gehalten werden. Bei einer bevorzugten Ausführungsform kann die Reißleine nach dem Flaschenzugprinzip über mehre Umlenkelemente geführt werden. Die nach dem Unfall kopfüber im Sicherheitsgurt hängende verunfallte Person ist bei Bewusstsein in der Lage, mit der Hand an die Abreißlasche zu kommen und kann durch Zug an der Abreißlasche das Gurtband mit der Klinge des Schlittens durchtrennen. Der Schlitten wird dabei durch die beispielsweise als Kanal ausgeführt Führung gezogen. Im Normalbetrieb kann der Schlitten durch die Rückhaltevorrichtung sicher in seiner Ausgangsposition gehalten werden, so dass das Gurtband nicht beschädigt werden kann. Erst durch Zug an der abgerissenen Abreißlasche kann er sich aus der sicheren Endlage herausbewegen. Mit Hilfe der durch mehrere, beispielsweise als Rollen ausgeführte Umlenkelemente geführten Reißleine ist nur eine geringe Kraft zum Durchtrennen des Gurtbandes erforderlich. Die Reißleine ist mit der Abreißlasche fest verbunden. Damit wird die Voraussetzung geschaffen, dass durch weiteres Ziehen an der Reißleine die einzelnen vernähten Falten des Überbrückungsbands gelöst werden können. Durch dieses fortlaufende Ziehen werden immer mehr Falten gelöst und das Überbrückungsband stückweise immer weiter verlängert, wodurch sich die verunfallte Person selbst kontrolliert auf das Dach oder die Seite des Fahrzeugs absenken kann. Auch Retter und Helfer können diese einfache, werkzeuglose Technik zum schnellen "Befreien" aus der Zwangslage nutzen. Um an der Reißleine ziehen zu können, wird vorher eine Abreißlasche abgerissen. Diese ist vorzugweise in Nähe einer Wurzel der B-Säule angeordnet und mit dem Gurtband vernäht.

In weiterer vorteilhafter Ausgestaltung der erfindungsgemäßen Sicherheitsvorrichtung kann ein erstes Umlenkelement beispielsweise am Schlitten befestigt und ein zweites Umlenkelement an einem zweiten Ende der Führung an der Befestigungsvorrichtung befestigt werden, welche einer Endlage des Schlittens entspricht. Hierbei kann ein Ende der Reißleine am zweiten Ende der Führung fest mit der Befestigungsvorrichtung verbunden werden. Zudem kann ein drittes Umlenkelement zwischen dem zweiten Umlenkelement und dem Betätigungselement an der Befestigungsvorrichtung befestigt werden, um eine optimale Führung der Reißleine zu ermöglichen.

In weiterer vorteilhafter Ausgestaltung der erfindungsgemäßen Sicherheitsvorrichtung kann eine optische und/oder akustische Ausgabeeinheit nach einer erkannten Dach- oder Seitenlage des Fahrzeugs eine Position des Betätigungselements und die Betätigungsart zur Aktivierung der Sicherheitsvorrichtung ausgeben.

In vorteilhafter Ausgestaltung des erfindungsgemäßen Verfahrens kann der Insasse die Abreißlasche abreißen und einen Finger in den Fingereingriff der Abreißlasche einführen und die Abreißlasche als Betätigungselement durch Ziehen betätigen. Vorzugweise kann die Position und Betätigungsart der Abreißlasche zur Aktivierung der Sicherheitsvorrichtung optisch und/oder akustisch angezeigt werden.

Ein Ausführungsbeispiel der Erfindung ist in der Zeichnung dargestellt und wird in der nachfolgenden Beschreibung näher erläutert. In der Zeichnung bezeichnen gleiche Bezugszeichen Komponenten bzw. Elemente, die gleiche bzw. analoge Funktionen ausführen. Hierbei zeigt:
- Fig. 1: eine schematische Darstellung eines Ausführungsbeispiels einer erfindungsgemäßen Sicherheitsvorrichtung für einen Sicherheitsgurt eines Fahrzeugs,
- Fig. 2: eine schematische Schnittdarstellung der erfindungsgemäßen Sicherheitsvorrichtung für einen Sicherheitsgurt eines Fahrzeugs aus Fig. 1, und
- Fig. 3: eine Detaildarstellung III aus Fig. 1.

Sicherheitsgurte 3 sind gesetzlich vorgeschriebene Standardausstattung in einem Kraftfahrzeug und umfassen in der Regel jeweils ein Gurtband 5, welches an einem Ende über eine Befestigungsvorrichtung 7 und am anderen Ende über eine nicht dargestellte Gurtaufrollvorrichtung, welche auch als Retraktor bezeichnet wird, mit dem Fahrzeugrohbau fest verbunden. Zudem ist das Gurtband 5 von der Befestigungsvorrichtung 7 über eine nicht dargestellte Umlenkvorrichtung auf Schulterhöhe des Insassen zur Gurtaufrollvorrichtung geführt. Für den Fahrersitz oder Beifahrersitz sind die Befestigungsvorrichtungen 7 und die Gurtaufrollvorrichtung im Bereich einer Wurzel der B-Säule mit dem Fahrzeugrohbau verschraubt. Die Gurtaufrollvorrichtung ermöglicht die Aufwicklung und Freigabe des Gurtbands 5 im Normalbetrieb, d.h. beim An- und Abschnallvorgang oder bei Bewegungen des Oberkörpers des Insassen. Des Weiteren weist ein solcher Sicherheitsgurt 3 ein nicht näher dargestelltes Gurtschloss auf, welches eine mit dem Gurtband 5 gekoppelte Gurtzunge und eine Gurtaufnahme umfasst, welche über eine weitere Befestigungsvorrichtung bzw. eine so genannte Gurtpeitsche am Fahrzeugrohbau fixiert, so dass der Sicherheitsgurt 3 im angelegten Zustand an drei Punkten am Fahrzeug fixiert ist.

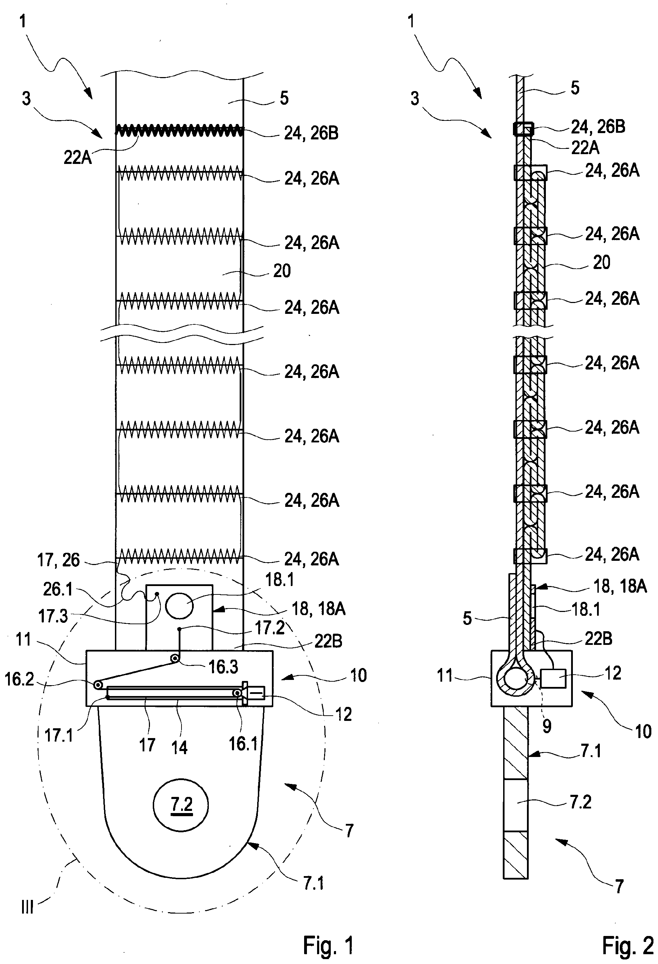

Wie aus Fig. 1 bis 3 ersichtlich ist, umfasst die Sicherheitsvorrichtung 1 für einen Sicherheitsgurt 3 eines Fahrzeugs im dargestellten Ausführungsbeispiel eine Trennvorrichtung 10, welche mit dem Gurtband 5 des Sicherheitsgurts 3 gekoppelt ist und ein in einer Führung 14 geführtes Trennelement 12 aufweist. Das Trennelement 12 ist durch Kraftbeaufschlagung eines Betätigungselements 18 in der Führung 14 bewegbar und durchtrennt das Gurtband 5.

Erfindungsgemäß ist die Trennvorrichtung 10 an der Befestigungsvorrichtung 7 des Gurtbands 5 angeordnet, wobei ein gefaltetes Überbrückungsband 20 an einem ersten Ende 22A fest am Gurtband 5 und an einem zweiten Ende 22B fest an der Befestigungsvorrichtung 7 befestigt ist und die Trennstelle 9 des durchtrennten Gurtbands 5 überbrückt. Das gefaltete Überbrückungsband 20 ist zwischen den beiden Enden 22A, 22B über Befestigungsmittel 24 lösbar mit dem Gurtband 5 verbunden. Die Befestigungsmittel 24 sind mit dem Betätigungselement 18 gekoppelt und durch Kraftbeaufschlagung des Betätigungselements 18 abschnittsweise lösbar, so dass die Falten des Überbrückungsbands 20 nacheinander freigebbar sind und jede freigegebene Falte des Überbrückungsbands 20 eine wirksame Gurtlänge des Sicherheitsgurts 3 verlängert.

Wie aus Fig. 1 bis 3 weiter ersichtlich ist, umfasst die Befestigungsvorrichtung 7 im dargestellten Ausführungsbeispiel eine Lasche 7.1 mit einer Öffnung 7.2. Durch die Öffnung 7.2 kann eine nicht dargestellte Schraube geführt und die Lasche 7.1 mit dem Fahrzeugrohbau verschraubt werden.

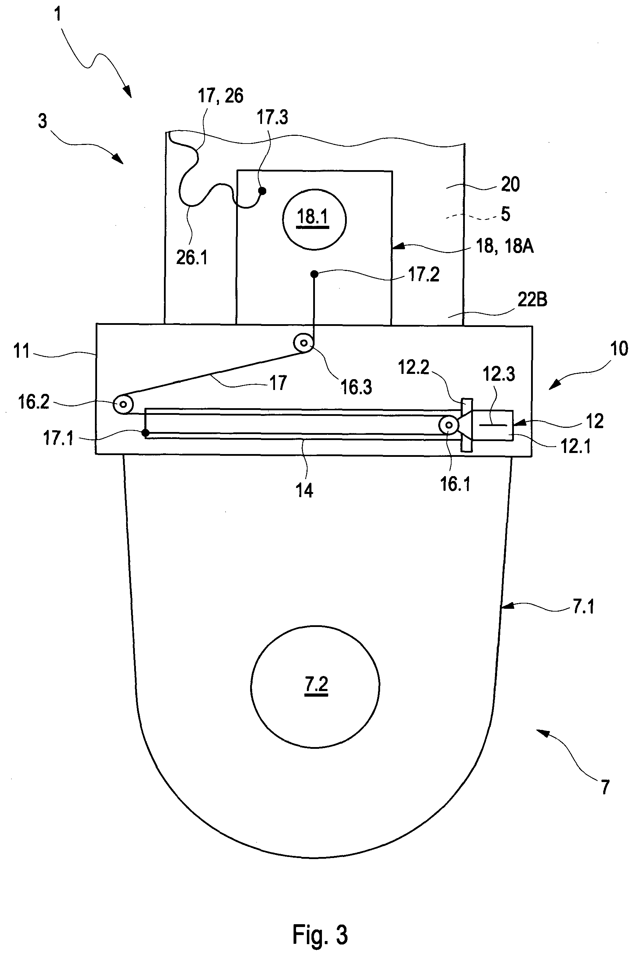

Wie aus Fig. 1 und 3 weiter ersichtlich ist, ist die Führung 14 der Trennvorrichtung 10 als Führungskanal ausgeführt und in einem Gehäuse 11 angeordnet. Zudem weist das Trennelement 12 einen in der Führung 14 bewegbaren Schlitten 12.1 mit einer Klinge 12.3 auf. Im Normalbetrieb ist der Schlitten 12.1 durch eine Rückhaltvorrichtung 12.2 in seiner Ausgangslage an einem ersten Ende der Führung 14 gehalten. Das Trennelement 12 ist im dargestellten Ausführungsbeispiel über eine Reißleine 17 mit dem Betätigungselement 18 gekoppelt. Wie aus Fig. 1 und 3 weiter ersichtlich ist, ist die Reißleine 17 an einem Ende an einem ersten Befestigungspunkt 17.1 fest mit der Befestigungsvorrichtung 7 und am anderen Ende an einem zweiten Befestigungspunkt 17.2 fest mit dem Betätigungselement 18 verbunden.

Wie aus Fig. 1 bis 3 weiter ersichtlich ist, ist das Betätigungselement 18 im dargestellten Ausführungsbeispiel als Abreißlasche 18A mit einem Fingereingriff 18.1 ausgeführt. Zur Benutzung der Sicherheitsvorrichtung 1 reißt der verunfallte Insasse oder ein Ersthelfer die Abreißlasche 18A ab und führt einen Finger in den Fingereingriff 18.1 der Abreißlasche 18A ein und betätigt die Abreißlasche 18A als Betätigungselement 18 durch Ziehen. Dadurch wird über die mit dem Betätigungselement 18 verbundene Reißleine 17 der Schlitten 12.1 mit der Klinge 12.3 in der Führung 14 von seiner Ausgangslage zu seiner Endlage bewegt und die Klinge 12.3 durchtrennt das Gurtband 5 in seiner Breite vollständig. Um die Zugkraft zum Bewegen des Schlittens 12.1 mit der Klinge 12.3 möglichst niedrig zu halten, ist die Reißleine 17 nach dem Flaschenzugprinzip über mehre Umlenkelemente 16.1, 16.2, 16.3 geführt.

Wie aus Fig. 1 und 3 weiter ersichtlich ist, ist ein erstes Umlenkelement 16.1 am Schlitten 12.1 befestigt. Ein zweites Umlenkelement 16.2 ist an einem zweiten Ende der Führung 14 an der Befestigungsvorrichtung 7 befestigt, welche einer Endlage des Schlittens 12.1 entspricht. Der erste Befestigungspunkt 17.1 der Reißleine 17 ist im Bereich des zweiten Endes der Führung 14 an der Befestigungsvorrichtung 7 angeordnet. Zudem ist im dargestellten Ausführungsbeispiel ein drittes Umlenkelement 16.3 zwischen dem zweiten Umlenkelement 16.2 und dem Betätigungselement 18 an der Befestigungsvorrichtung 7 befestigt. Im dargestellten Ausführungsbeispiel sind die Umlenkelemente 16.1, 16.2, 16.3 jeweils als Umlenkrolle ausgeführt.

Wie Fig. 1 und 2 weiter ersichtlich ist, umfassen die Befestigungsmittel 24 einen Faden 26, welcher am ersten Ende 22A des Überbrückungsbands 20 mindestens eine feste und nicht lösbare Naht 26B und zwischen den beiden Enden 22A, 22B des Überbrückungsbands 20 mehrere lösbare Nähte 26A zwischen dem Gurtband 5 und dem Überbrückungsband 20 ausbildet und an einem dritten Befestigungspunkt 17.3 fest mit dem Betätigungselement 18 verbunden ist. Hierbei fixieren die lösbaren Nähte 26A jeweils mindestens eine Falte des Überbrückungsbands 20 am Gurtband 5. Der Abstand der Falten des Überbrückungsbands 20 bestimmt die abschnittweise Verlängerung der wirksamen Gurtlänge des Sicherheitsgurts 3. Die einzelnen Abstände können beispielsweise so vorgegeben werden, dass die wirksame Länge des Überbrückungsbands 20 und damit die wirksame Gurtlänge des Sicherheitsgurts 3 in Schritten von 5 bis 10mm bis zu einer Gesamtverlängerung von ca. 40 bis 50 cm verlängert werden kann. Im dargestellten Ausführungsbeispiel bildet die Reißleine 17 auch den Faden 26 aus. Die Kopplung des Betätigungselements 18 mit dem Trennelement 12 und die Kopplung des Betätigungselements 18 mit den Befestigungsmitteln 24 ist so ausgeführt, dass bei einer Kraftbeaufschlagung des Betätigungselements 18 zuerst das Trennelement 12 zur Durchtrennung des Gurtbands 5 aktiviert wird und dann die Befestigungsmittel 24 gelöst werden. Im dargestellten Ausführungsbeispiel wird dies durch eine überschüssige Fadenlänge 26.1 zwischen dem Betätigungselement 18 und einer ersten lösbaren Naht 26 umgesetzt. Die überschüssige Fadenlänge ist so gewählt, dass die erste lösbare Naht 26A erst gelöst wird, wenn das Gurtband 5 vollständig durchtrennt ist.

Vorzugsweise kann die Sicherheitsvorrichtung 1 eine optische und/oder akustische Ausgabeeinheit aufweisen, die beispielsweise als Teil eines Infotainment-Systems ausgeführt ist, nach einer erkannten Dach- oder Seitenlage des Fahrzeugs eine Position des Betätigungselements 18 und die Betätigungsart zur Aktivierung der Sicherheitsvorrichtung optisch auf einem Bildschirm oder akustisch als Sprachausgabe ausgeben. Dadurch kann dem noch handlungsfähigen verunfallten Insassen oder dem Ersthelfer mitgeteilt werden, wie der Insasse aus der Zwangslage befreit werden kann.

Durch das erfindungsgemäße Verfahren zur Entlastung eines Sicherheitsgurts 3 bei einer Dach- oder Seitenlage eines verunfallten Fahrzeugs unter Verwendung der Sicherungsvorrichtung 1 kann durch den verunfallten Insassen selbst oder durch einen Ersthelfer eine Kraft auf das Betätigungselement 18 ausgeübt und über die Trennvorrichtung 10 das Gurtband 5 im Bereich der Befestigungsvorrichtung 7 durchtrennt werden. Das Überbrückungsband 20 überbrückt dann die Trennstelle 9 des durchtrennten Gurtbands 5 und das kraftbeaufschlagte Betätigungselement 18 löst die Befestigungsmittel 24 abschnittsweise, so dass die Falten des Überbrückungsbands 20 nacheinander freigegeben und die wirksame Gurtlänge des Sicherheitsgurts 3 bis zum Aufliegen des Insassen stückweise verlängert wird.

Durch die Trennvorrichtung 10 kann das Gurtband 5 des Sicherheitsgurts 3 gewollt durchtrennt werden. Ab diesem Zeitpunkt hängt die Person am Überbrückungsband 20. Dieses übernimmt die gesamte Zuglast. Bei weiterer Kraftbeaufschlagung des Betätigungselements 18 entsteht eine Verlängerung des Überbrückungsbands 20 und dadurch eine Verlängerung der wirksamen Gurtlänge des Sicherheitsgurts 3. Das Überbrückungsband 20 wird deshalb länger, weil die Falten sich nach und nach öffnen und die verunfallte Person in kleinen Schritten immer weiter abgesenkt wird, bis sie auf dem Dach oder der Seite des Fahrzeugs aufliegt. Weitere Rettungsschritte können dann erfolgen. Die Gefahr mit dem Kopf voraus auf das Dach zu fallen besteht in vorteilhafter Weise nicht mehr.

### BEZUGSZEICHENLISTE

- 1: Sicherheitsvorrichtung
- 3: Sicherheitsgurt
- 5: Gurtband
- 7: Befestigungsvorrichtung
- 7.1: Lasche
- 7.2: Öffnung
- 9: Trennstelle
- 10: Trennvorrichtung
- 11: Gehäuse
- 12: Trennelement
- 12.1: Schlitten
- 12.2: Rückhaltvorrichtung
- 12.3: Klinge
- 14: Führung
- 16.1, 16.2, 16.3: Umlenkelement
- 17: Reißleine
- 17.1, 17.2, 17.3: Befestigungspunkt
- 18: Betätigungselement
- 18A: Abreißlasche
- 18.1: Fingereingriff
- 20: Überbrückungsband
- 22A: erstes Ende
- 22B: zweites Ende
- 24: Befestigungsmittel
- 26: Faden
- 26A: lösbare Naht
- 26B: feste und nicht lösbare Naht
- 26.1: überschüssige Fadenlänge

## Patentansprüche

1. Sicherheitsvorrichtung (1) für einen Sicherheitsgurt (3) eines Fahrzeugs, mit einer Trennvorrichtung (10), welche mit einem Gurtband (5) des Sicherheitsgurts (3) gekoppelt ist und ein in einer Führung (14) geführtes Trennelement (12) aufweist, welches durch Kraftbeaufschlagung eines Betätigungselements (18) in der Führung (14) bewegbar ist und das Gurtband (5) durchtrennt, **dadurch gekennzeichnet, dass** die Trennvorrichtung (10) an einer Befestigungsvorrichtung (7) des Gurtbands (5) angeordnet ist, wobei ein gefaltetes Überbrückungsband (20) an einem ersten Ende (22A) fest am Gurtband (5) und an einem zweiten Ende (22B) fest an der Befestigungsvorrichtung (7) befestigt ist und die Trennstelle (9) des durchtrennten Gurtbands (5) überbrückt, wobei das gefaltete Überbrückungsband (20) zwischen den beiden Enden (22A, 22B) über Befestigungsmittel (24) lösbar mit dem Gurtband (5) verbunden ist, wobei die Befestigungsmittel (24) mit dem Betätigungselement (18) gekoppelt sind und durch Kraftbeaufschlagung des Betätigungselements (18) abschnittsweise lösbar sind, so dass die Falten des Überbrückungsbands (20) nacheinander freigebbar sind und jede freigegebene Falte des Überbrückungsbands (20) eine wirksame Gurtlänge des Sicherheitsgurts (3) verlängert.

2. Sicherheitsvorrichtung (1) nach Anspruch 1, **dadurch gekennzeichnet, dass** die Kopplung des Betätigungselements (18) mit dem Trennelement (12) und die Kopplung des Betätigungselements (18) mit den Befestigungsmitteln (24) so ausgeführt ist, dass bei einer Kraftbeaufschlagung des Betätigungselements (18) zuerst das Trennelement (12) zur Durchtrennung des Gurtbands (5) aktiviert wird und dann die Befestigungsmittel (24) gelöst werden.

3. Sicherheitsvorrichtung (1) nach Anspruch 1 oder 2, **dadurch gekennzeichnet, dass** das Trennelement (12) über eine Reißleine (17) mit dem Betätigungselement (18) gekoppelt ist.

4. Sicherheitsvorrichtung (1) nach Anspruch 3, **dadurch gekennzeichnet, dass** die Reißleine (17) an einem Ende fest mit der Befestigungsvorrichtung (7) und am anderen Ende fest mit dem Betätigungselement (18) verbunden ist,

5. Sicherheitsvorrichtung (1) nach einem der Ansprüche 1 bis 4, **dadurch gekennzeichnet, dass** die Befestigungsmittel (24) einen Faden (26) umfassen, welcher am ersten Ende (22A) des Überbrückungsbands (20) mindestens eine feste und nicht lösbare Naht (26B) und zwischen den beiden Enden (22A, 22B) des Überbrückungsbands (20) mehrere lösbare Nähte (26A) zwischen dem Gurtband (5) und dem Überbrückungsband (20) ausbildet, wobei die lösbaren Nähte (26A) jeweils mindestens eine Falte des Überbrückungsbands (20) am Gurtband (5) fixieren.

6. Sicherheitsvorrichtung (1) nach Anspruch 5, **dadurch gekennzeichnet, dass** der Abstand der Falten des Überbrückungsbands (20) die abschnittweise Verlängerung der wirksamen Gurtlänge des Sicherheitsgurts (3) bestimmt.

7. Sicherheitsvorrichtung (1) nach Anspruch 5 oder 6, **dadurch gekennzeichnet, dass** der Faden (26) fest mit dem Betätigungselement (18) verbunden ist.

8. Sicherheitsvorrichtung (1) nach einem der Ansprüche 5 bis 7, **dadurch gekennzeichnet, dass** die Reißleine (17) auch den Faden (26) ausbildet.

9. Sicherheitsvorrichtung (1) nach einem der Ansprüche 1 bis 8, **dadurch gekennzeichnet, dass** das Betätigungselement (18) als Abreißlasche (18A) mit einem Fingereingriff (18.1) ausgeführt ist.

10. Sicherheitsvorrichtung (1) nach einem der Ansprüche 1 bis 9, **dadurch gekennzeichnet, dass** das Trennelement (12) einen in der Führung (14) bewegbaren Schlitten (12.1) mit einer Klinge (12.3) aufweist, wobei der Schlitten (12.1) im Normalbetrieb durch eine Rückhaltvorrichtung (12.2) in seiner Ausgangslage an einem ersten Ende der Führung (14) gehalten ist.

11. Sicherheitsvorrichtung (1) nach Anspruch 10, **dadurch gekennzeichnet, dass** die Reißleine (17) nach dem Flaschenzugprinzip über mehre Umlenkelemente (16.1, 16.2, 16.3) geführt ist.

12. Sicherheitsvorrichtung (1) nach Anspruch 11, **dadurch gekennzeichnet, dass** ein erstes Umlenkelement (16.1) am Schlitten (12.1) befestigt ist und ein zweites Umlenkelement (16.2) an einem zweiten Ende der Führung (14) an der Befestigungsvorrichtung (7) befestigt ist, welche einer Endlage des Schlittens (12.1) entspricht, wobei ein Ende der Reißleine (17) am zweiten Ende der Führung (14) fest mit der Befestigungsvorrichtung (7) verbunden ist.

13. Sicherheitsvorrichtung (1) nach Anspruch 12, **dadurch gekennzeichnet, dass** ein drittes Umlenkelement (16.3) zwischen dem zweiten Umlenkelement (16.2) und dem Betätigungselement (18) an der Befestigungsvorrichtung (7) befestigt ist.

14. Sicherheitsvorrichtung (1) nach einem der Ansprüche 1 bis 13, **dadurch gekennzeichnet, dass** eine optische und/oder akustische Ausgabeeinheit nach einer erkannten Dach- oder Seitenlage des Fahrzeugs eine Position des Betätigungselements (18) und die Betätigungsart zur Aktivierung der Sicherheitsvorrichtung ausgibt.

15. Verfahren zur Entlastung eines Sicherheitsgurts (3) bei einer Dach- oder Seitenlage eines verunfallten Fahrzeugs unter Verwendung der Sicherungsvorrichtung (1), welche nach zumindest einem der Ansprüche 1 bis 14 ausgeführt ist, **dadurch gekennzeichnet, dass** eine Kraft auf das Betätigungselement (18) ausgeübt und über die Trennvorrichtung (10) das Gurtband (5) im Bereich der Befestigungsvorrichtung (7) durchtrennt wird, wobei das Überbrückungsband (20) die Trennstelle (9) des durchtrennten Gurtbands (5) überbrückt und das kraftbeaufschlagte Betätigungselement (18) die Befestigungsmittel (24) abschnittsweise löst, so dass die Falten des Überbrückungsbands (20) nacheinander freigegeben und die wirksame Gurtlänge des Sicherheitsgurts (3) bis zum Aufliegen des Insassen stückweise verlängert wird.

16. Verfahren nach Anspruch 14, **dadurch gekennzeichnet, dass** der Insasse die Abreißlasche (18A) abreißt und einen Finger in den Fingereingriff (18.1) der Abreißlasche (18A) einführt und die Abreißlasche (18A) als Betätigungselement (18) durch Ziehen betätigt.

17. Verfahren nach Anspruch 14 oder 15, **dadurch gekennzeichnet, dass** die Position und Betätigungsart der Abreißlasche (18A) zur Aktivierung der Sicherheitsvorrichtung (1) optisch und/oder akustisch angezeigt werden.

18. Fahrzeug mit mindestens einem Sicherheitsgurt (3) und einer Sicherheitsvorrichtung (1) für den mindestens einen Sicherheitsgurt (3), **dadurch gekennzeichnet, dass** die Sicherheitsvorrichtung (1) nach zumindest einem der Ansprüche 1 bis 14 ausgeführt ist.

## Claims

1. Safety device (1) for a safety belt (3) of a vehicle, with a separating device (10) which is coupled to a belt strap (5) of the safety belt (3) and a separating element (12) leading into a guide (14) which is movable in the guide (14) by application of force on an actuation element (18) and severs the belt strap (5), **characterised in that** the separating device (10) is arranged on a fastening device (7) of the belt strap (5), wherein a folded overlapping strap (20) at a first end (22A) is fixedly fastened to the belt strap (5) and at a second end (22B) is fixedly fastened to the fastening device (7) and overlaps the separating point (9) of the severed belt strap (5), wherein the folded overlapping strap (20) is detachably connected to the belt strap (5) between the two ends (22A, 22B) via fastening means (24), wherein the fastening means (24) are coupled to the actuation element (18) and are detachable in sections by application of force on the actuation element (18) such that the folds of the overlapping strap (20) are releasable in succession and each released fold of the overlapping strap (20) extends an effective belt length of the safety belt (3).

2. Safety device (1) according to claim 1, **characterised in that** the coupling of the actuation element (18) to the separating element (12) and the coupling of the actuation element (18) to the fastening means (24) is configured such that in the case of an application of force on the actuation element (18), the separating element (12) is firstly activated to sever the belt strap (5) and then the fastening means (24) are disengaged.

3. Safety device (1) according to claim 1 or 2, **characterised in that** the separating element (12) is coupled to the actuation element (18) via a release cord (17).

4. Safety device (1) according to claim 3, **characterised in that** the release cord (17) is fixedly connected at one end to the fastening device (7) and fixedly connected at another end to the actuation element (18).

5. Safety device (1) according to any one of claims 1 to 4, **characterised in that** the fastening means (24) comprise a thread (26) which, at the first end (22A) of the overlapping strap (20), forms at least one fixed and undetachable seam (26B) and, between the two ends (22A, 22B) of the overlapping strap (20), forms a plurality of detachable seams (26A) between the belt strap (5) and the overlapping strap (20), wherein the detachable seams (26A) each fix at least one fold of the overlapping strap (20) to the belt strap (5).

6. Safety device (1) according to claim 5, **characterised in that** the distance of the folds on the overlapping strap (20) determines the sectionwise extension of the effective belt length of the safety belt (3).

7. Safety device (1) according to claim 5 or 6, **characterised in that** the thread (26) is fixedly connected to the actuation element (18).

8. Safety device (1) according to any one of claims 5 to 7, **characterised in that** the release cord (17) also forms the thread (26).

9. Safety device (1) according to any one of claims 1 to 8, **characterised in that** the actuation element (18) is configured as a tear-off tab (18A) with a finger engagement (18.1).

10. Safety device (1) according to any one of claims 1 to 9, **characterised in that** the separating element (12) has a carriage (12.1) movable in the guide (14) with a blade (12.3), wherein the carriage (12.1) is held during normal operation by a retaining device (12.2) in its starting position at a first end of the guide (14).

11. Safety device (1) according to claim 10, **characterised in that** the release cord (17) is guided according to the pulley principle via a plurality of deflection elements (16.1,16.2, 16.3).

12. Safety device (1) according to claim 11, **characterised in that** a first deflection element (16.1) is fastened on the carriage (12.1) and a second deflection element (16.2) is fastened at a second end of the guide (14) on the fastening device (7), which corresponds to an end position of the carriage (12.1), wherein an end of the release cord (17) is fixedly connected to the fastening device (7) at the second end of the guide (14).

13. Safety device (1) according to claim 12, **characterised in that** a third deflection element (16.3) is fastened between the second deflection element (16.2) and the actuation element (18) on the fastening device (7).

14. Safety device (1) according to any one of claims 1 to 13, **characterised in that** an optical and/or acoustic emitting unit emits a position of the actuation element (18) and the actuation type to activate the safety device after a detected roof or lateral position of the vehicle.

15. Method to release a safety belt (3) in the case of a roof or lateral position of a vehicle involved in an accident using the safety device (1), which is configured according to at least one of claims 1 to 14, **characterised in that** a force is exerted on the actuation element (18) and the belt strap (5) is severed via the separating device (10) in the region of the fastening device (7), wherein the overlapping strap (20) overlaps the separating point (9) of the severed belt strap (5) and the actuation element (18) with forced applied disengages the fastening means (24) in sections so that the folds of the overlapping strap (20) release in succession and the effective belt length of the safety belt (3) is extended in parts until the occupant is supported.

16. Method according to claim 14, **characterised in that** the occupant tears off the tear-off tab (18A) and inserts a finger into the finger engagement (18.1) of the tear-off tab (18A) and actuates the tear-off tab (18A) as an actuating element (18) by pulling.

17. Method according to claim 14 or 15, **characterised in that** the position and actuation type of the tear-off tab (18A) to activate the safety device (1) is indicated optically and/or acoustically.

18. Vehicle with at least one safety belt (3) and a safety device (1) for the at least one safety belt (3), **characterised in that** the safety device (1) is configured according to at least one of claims 1 to 14.

## Revendications

1. Dispositif de sécurité (1) pour une ceinture de sécurité (3) d'un véhicule, avec un dispositif de séparation (10) qui est couplé à une bande de ceinture (5) de la ceinture de sécurité (3) et présente un élément de séparation (12) guidé dans un guidage (14) qui est mobile par sollicitation de force d'un élément d'actionnement (18) dans le guidage (14) et sépare la bande de ceinture (5), **caractérisé en ce que** le dispositif de séparation (10) est agencé sur un dispositif de fixation (7) de la bande de ceinture (5), dans lequel une bande de pontage (20) pliée est fixée à une première extrémité (22A) fixement sur la bande de ceinture (5) et à une seconde extrémité (22B) fixement sur le dispositif de fixation (7) et ponte le point de séparation (9) de la bande de ceinture (5) séparée, dans lequel la bande de pontage (20) pliée est raccordée entre les deux extrémités (22A, 22B) par des moyens de fixation (24) de manière détachable à la bande de ceinture (5), dans lequel les moyens de fixation (24) sont couplés à l'élément d'actionnement (18) et sont détachables par section par sollicitation de force de l'élément d'actionnement (18) de sorte que les plis de la bande de pontage (20) soient libérables l'un après l'autre et chaque pli libéré de la bande de pontage (20) prolonge une longueur de ceinture active de la ceinture de sécurité (3).

2. Dispositif de sécurité (1) selon la revendication 1, **caractérisé en ce que** le couplage de l'élément d'actionnement (18) est réalisé avec l'élément de séparation (12) et le couplage de l'élément d'actionnement (18) est réalisé avec les moyens de fixation (24) de sorte que pour une sollicitation de force de l'élément d'actionnement (18) tout d'abord l'élément de séparation (12) soit activé pour la séparation de la bande de ceinture (5) et les moyens de fixation (24) soient ensuite détachés.

3. Dispositif de sécurité (1) selon la revendication 1 ou 2, **caractérisé en ce que** l'élément de séparation (12) est couplé par un cordon de déverrouillage (17) avec l'élément d'actionnement (18).

4. Dispositif de sécurité (1) selon la revendication 3, **caractérisé en ce que** le cordon de déverrouillage (17) est raccordé à une extrémité fixement au dispositif de fixation (7) et à l'autre extrémité fixement à l'élément d'actionnement (18).

5. Dispositif de sécurité (1) selon l'une quelconque des revendications 1 à 4, **caractérisé en ce que** les moyens de fixation (24) comportent un fil (26) qui réalise à la première extrémité (22A) de la bande de pontage (20) au moins une couture fixe et non détachable (26B) et entre les deux extrémités (22A, 22B) de la bande de pontage (20) plusieurs coutures détachables (26A) entre la bande de ceinture (5) et la bande de pontage (20), dans lequel les coutures détachables (26A) fixent respectivement au moins un pli de la bande de pontage (20) sur la bande de ceinture (5).

6. Dispositif de sécurité (1) selon la revendication 5, **caractérisé en ce que** la distance des plis de la bande de pontage (20) détermine le prolongement par section de la longueur de ceinture active de la ceinture de sécurité (3).

7. Dispositif de sécurité (1) selon la revendication 5 ou 6, **caractérisé en ce que** le fil (26) est raccordé fixement à l'élément d'actionnement (18).

8. Dispositif de sécurité (1) selon l'une quelconque des revendications 5 à 7, **caractérisé en ce que** le cordon de déverrouillage (17) réalise aussi le fil (26).

9. Dispositif de sécurité (1) selon l'une quelconque des revendications 1 à 8, **caractérisé en ce que** l'élément d'actionnement (18) est réalisé en tant que languette de déchirage (18A) avec une prise de doigt (18.1).

10. Dispositif de sécurité (1) selon l'une quelconque des revendications 1 à 9, **caractérisé en ce que** l'élément de séparation (12) présente un chariot (12.1) mobile dans le guidage (14) avec une lame (12.3), dans lequel le chariot (12.1) est maintenu en fonctionnement normal par un dispositif de retenue (12.2) dans sa position de départ à une première extrémité du guidage (14).

11. Dispositif de sécurité (1) selon la revendication 10, **caractérisé en ce que** le cordon de déverrouillage (17) est guidé selon le principe de la poulie mouflée par plusieurs éléments de renvoi (16.1, 16.2, 16.3).

12. Dispositif de sécurité (1) selon la revendication 11, **caractérisé en ce qu'**un premier élément de renvoi (16.1) est fixé sur le chariot (12.1) et un deuxième élément de renvoi (16.2) est fixé à une seconde extrémité du guidage (14) sur le dispositif de fixation (7), qui correspond à une position d'extrémité du chariot (12.1), dans lequel une extrémité du cordon de déverrouillage (17) est raccordée à la seconde extrémité du guidage (14) fixement au dispositif de fixation (7).

13. Dispositif de sécurité (1) selon la revendication 12, **caractérisé en ce qu'**un troisième élément de renvoi (16.3) est fixé entre le deuxième élément de renvoi (16.2) et l'élément d'actionnement (18) sur le dispositif de fixation (7).

14. Dispositif de sécurité (1) selon l'une quelconque des revendications 1 à 13, **caractérisé en ce qu'**une unité de sortie optique et/ou acoustique émet selon une position de toit ou latérale reconnue du véhicule une position de l'élément d'actionnement (18) et le type d'actionnement pour l'activation du dispositif de sécurité.

15. Procédé de décharge d'une ceinture de sécurité (3) pour une position de toit ou latérale d'un véhicule accidenté en utilisant le dispositif de sécurité (1) qui est réalisé selon au moins l'une quelconque des revendications 1 à 14, **caractérisé en ce qu'**une force est exercée sur l'élément d'actionnement (18) et la bande de ceinture (5) est séparée par le dispositif de séparation (10) dans la zone du dispositif de fixation (7), dans lequel la bande de pontage (20) ponte le point de séparation (9) de la bande de ceinture (5) séparée et l'élément d'actionnement (18) sollicité par la force détache les moyens de fixation (24) par section de sorte que les plis de la bande de pontage (20) soient libérés les uns après les autres et la longueur de ceinture active de la ceinture de sécurité (3) soit prolongée progressivement jusqu'au repos de l'occupant.

16. Procédé selon la revendication 14, **caractérisé en ce que** l'occupant déchire la languette de déchirure (18A) et introduit un doigt dans la prise de doigt (18.1) de la languette de déchirure (18A) et actionne la languette de déchirure (18A) en tant qu'élément d'actionnement (18) par traction.

17. Procédé selon la revendication 14 ou 15, **caractérisé en ce que** la position et le type d'actionnement de la languette de déchirure (18A) sont indiqués pour l'activation du dispositif de sécurité (1) par voie optique et/ou acoustique.

18. Véhicule avec au moins une ceinture de sécurité (3) et un dispositif de sécurité (1) pour l'au moins une ceinture de sécurité (3), **caractérisé en ce que** le dispositif de sécurité (1) est réalisé selon au moins l'une quelconque des revendications 1 à 14.
